(19) Europäisches Patentamt
European Patent Office
Office européen des brevets

(11) **EP 1 200 949 B1**

(12) **EUROPEAN PATENT SPECIFICATION**

(45) Date of publication and mention of the grant of the patent:
**24.09.2008 Bulletin 2008/39**

(51) Int Cl.:
***G08G 5/02*** (2006.01)

(21) Application number: **00989178.9**

(86) International application number:
**PCT/US2000/020451**

(22) Date of filing: **27.07.2000**

(87) International publication number:
**WO 2001/020583 (22.03.2001 Gazette 2001/12)**

(54) **FLIGHT INFORMATION DISPLAY**

EINRICHTUNG ZUR DARSTELLUNG VON FLUGFÜHRUNGSINFORMATION

BALAYAGE DE TERRAIN/POINT DE CHEMINEMENT AFFICHEUR DE POSITION VERTICALE, DISTANCE PAR RAPPORT A LA VITESSE PREAFFICHEE ET REFERENCE PONDEREE DE L'AVION

(84) Designated Contracting States:
**DE FR GB**

(30) Priority: **30.07.1999 US 146489 P**

(43) Date of publication of application:
**02.05.2002 Bulletin 2002/18**

(73) Proprietor: **The Boeing Company Chicago IL 60606-2016 (US)**

(72) Inventors:
• **CHEN, Sherwin S.**
  **Bellevue, WA 98006 (US)**
• **Fox, Julianne M.**
  **Seattle, WA 98124-2207 (US)**
• **MOLLOY, Neal, D.**
  **Mukilteo, WA 98275 (US)**
• **WIEDEMANN, John**
  **Bothell, WA 98011 (US)**

(74) Representative: **Land, Addick Adrianus Gosling et al**
  **Arnold & Siedsma**
  **Sweelinckplein 1**
  **2517 GK The Hague (NL)**

(56) References cited:
| | |
|---|---|
| EP-A- 0 324 195 | DE-A- 3 546 116 |
| US-A- 4 283 705 | US-A- 5 289 185 |
| US-A- 5 445 021 | US-A- 5 839 080 |
| US-A- 5 936 552 | US-A- 6 154 151 |

**Description**

**BACKGROUND OF THE INVENTION**

In modem flight decks, the primary flight information display (PFD) and the navigation display (ND) are the key displays available for providing situational awareness to the pilot. Although the primary flight information display provides aircraft attitude and performance information through the attitude direction indicator (ADI), airspeed tape, heading and track indicator, and vertical speed indicator (VSI), the performance information is not shown in relation to the aircraft's surroundings. The navigation display provides fairly complete horizontal situational awareness with a top down (map) view of the aircraft and its surroundings. The navigation display tries to address vertical situational awareness through a vertical path deviation indicator, waypoint altitude constraint information, a range to altitude arc, and a selectable terrain picture from a Terrain Awareness and Warning Systems (TAWS). TAWS provides a contour map of surrounding terrain. Due to the display shading limitations and the nature of a top down view display, the contour map can only provide a general awareness of the surrounding terrain height. Also, to avoid pilot complacency and possible false alarms on takeoff and landing, some systems may have a "blackout" elevation below which the display provides no terrain information in normal conditions. Even with these vertical situational awareness features on the navigation display, the information still requires some interpretation, and approach and landing accidents continue to occur. This leaves the pilot with TAWS to provide both horizontal and vertical situational awareness of terrain. The pilot may not be able to perform an optimal vertical maneuver if the pilot is not aware of the height of the surrounding terrain.

For flight deck displays that show the terrain directly in front of the aircraft, the input for this type of device may be a database of topography information that generates a display based on position information from the aircraft's navigational equipment. However, the display changes with slight adjustments to the direction of the aircraft, making it appear "noisy". Also, navigational instruments for determining the exact position of an aircraft usually have some degree of error. For example, if the aircraft's automated navigational equipment is only accurate to within 18520 m. (10 nautical miles) of the exact location of the aircraft, and the topography display only shows a "line" of topography directly in front of where the aircraft instruments indicate the aircraft is located, the topography display will be not be accurate as to the topography directly in front of the aircraft if the aircraft's exact position is actually 17594 m. (9.5 nautical miles) from the location indicated by the navigation equipment. A presentation of terrain and waypoints along the current track of the aircraft provides some awareness, but during turns the pilot will not see terrain in the projected path of the turn.

To assist pilots with final approach and landing, a localizer and a glideslope indicator may be provided on the electronic attitude director indicator to give the pilot information as to how much the aircraft is deviating from the ideal landing approach angle, as defined by a radio signal from the runway. When the aircraft is not on this ideal path, the flight deck instruments do not indicate the degree of correction required to return the aircraft to the correct descent path. If the pilot under- or overcorrects the descent angle and cannot position the aircraft onto a suitable landing approach path in a short period of time, the pilot may have to make a decision to abort the landing, circle, and begin another landing approach. A system that gives the pilot better information about the current relationship between the aircraft and the ideal descent and landing approach path will aid the pilot..

At various times during ascent and descent of an aircraft, it may be necessary for the aircraft to reach a target speed by the time the aircraft reaches a particular geographic point. The airspeed tape on the primary flight information display indicates current and selected airspeeds, but the pilot has to judge how long it will take to achieve the selected airspeed. The pilot then needs to calculate how far the aircraft will travel before the target speed is achieved. These calculations and estimations may not be very precise and may distract the pilot from performing other duties connected with flying the aircraft and maintaining an accurate mental picture of the situation.

For many of the flight information displays in the cockpit, the reference mark by which the instrument is read is either fixed with a moving scale to indicate the value of parameter (for example, an altimeter tape) or the reference mark moves with respect to a fixed scale (for example, a vertical speed indicator). If the reference aircraft symbol on a vertical profile display (VPD) is fixed near the bottom of the display and the aircraft is in a descent, the resolution of the display for that range of altitudes will be insufficient to provide the pilot with any increased awareness of the terrain the aircraft is approaching. Similarly if the aircraft symbol is fixed at the top of the display and the aircraft is climbing, resolution will be insufficient to increase the pilot's awareness of the airplane's relationship with the terrain ahead.

One known type of vertical display provides a terrain picture for the navigation displays, EHSIs, and standalone weather radar display units. Another known vertical profile display depicts the flight plan in an along flight plan presentation. The waypoints are positioned relative to each other and not on an absolute scale (For example, if waypoint A is at FL390 and waypoint B has an altitude constraint of FL410, then waypoint A will be at a position on the display lower than waypoint B, but otherwise the vertical position of the points will not correlate to any absolute scale). A display that provides better vertical flight situation awareness to the pilot would be desirable.

US 5445021 discloses a flight information display in an altitude/ground distance reference system. The position of the aerodyne can be indicated on the screen.

US 5839080 discloses a terrain awareness system which provides increased warning times to the pilot of an aircraft. The system includes an airport data base and a terrain data base.

The display of the invention according to claim 1 provides flight information to assist the pilot in avoiding terrain collisions or making more efficient and safe landing approaches. The displays provide this information in a format that is relatively intuitive for the pilot to understand without substantial analysis, interpretation, false alarms, or unnecessary distraction from other duties, and conforms to standard graphical depictions used on approach charts and other places in the flight deck, thereby allowing the pilot to make any necessary adjustments to the speed and direction of the aircraft relatively quickly and precisely

## BRIEF DESCRIPTION OF THE SEVERAL VIEWS OF THE DRAWING

Figure 1 illustrates one embodiment of a Vertical Profile Display providing a view of the vertical terrain along the track of the aircraft.

Figure 2 is a schematic of one embodiment of a terrain swath used to generate the vertical profile display.

Figure 3 illustrates a display that shows the terrain in the path of the turn, taking into account the aircraft's cross track acceleration, in which case the boundary of the swath also rotates away from the track line with the origin of the aircraft as the rotation point.

Figure 4 illustrates a vertical situation display having a triangular-shaped icon positioned towards the left side of the display, which represents the aircraft.

Figures 5, 6, and 7 illustrate one embodiment of a display that gives the pilot information about the location at which the aircraft will reach a target speed.

Figure 8 shows a display with a collection of points where the target speed will be achieved at various angles.

Figure 9 illustrates an embodiment of a display wherein the range-to-target speed symbol is located on the flight vector on a navigation display.

Figure 10 illustrates an embodiment of a display wherein the range-to-target speed symbol is located on the flight vector on a three-dimensional perspective map.

Figure 11 illustrates an embodiment of a display wherein the range-to-target speed symbol is located on head up display.

## DETAILED DESCRIPTION OF THE INVENTION

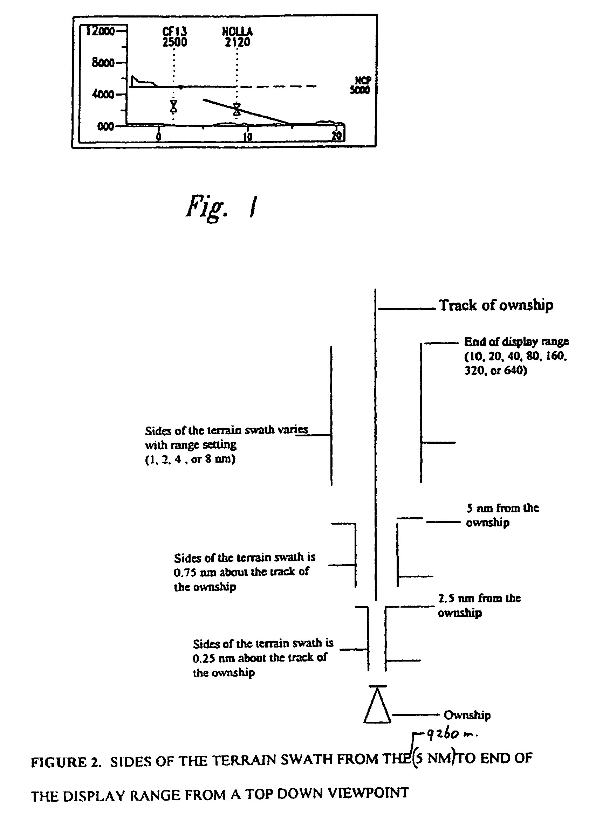

The flight information display of the invention specifies a region in front of the aircraft to show terrain, waypoints and runways, on a vertical profile display. The source of the information to generate the profile of the terrain display may come from, but is not limited to, an on-board computer having a database of topographical information or a ground mapping radar. A Vertical Profile Display (VPD), provides a view of the vertical plane along the track of the aircraft (see Figure 1), and may also display other information such as data on aircraft performance or target altitude information.

The terrain depicted on the display is the highest terrain that is within a specified swath of terrain along the direction of the airplane's track. Specifically, the terrain value depicted at any given distance from the airplane symbol is the maximum terrain height along an arc at that given distance centered on the airplane and bounded by the edges of the swath. The swath may be of any suitable width or shape, but preferably widens as the distance from the airplane increases to take into account any slight variations from a straight-line trajectory in the path of the airplane. Most preferably, the swath is approximately the shape of a triangle with a corner at the nose of the airplane. In one embodiment, the projected swath also includes terrain in the direction of a turn because the swath preferably widens in the direction of any turns. In this embodiment, an algorithm calculates the swath to be projected and bases the width of the most distant part on the swath by the sensed crosstrack acceleration.

The width of the terrain used for input to generate the display is preferably at least about 277,8 m. (0.15 nautical miles (nm)), more preferably at least 555.6 m. (0.30 nm). The width is also preferably at least the resolution of the terrain database, most preferably at least the required navigation performance (RNP) for the current phase of flight or landing approach; but preferably no greater than 3 times the RNP for that phase of flight or approach, and more preferably no greater than 2 times the RNP for that phase of flight or approach. The distance in front of the aircraft depicted in the display is preferably at least 926 m. (0.5 nm). If the flight deck also contains on a separate top-down display of terrain in front of the airplane to the compass rose the distance depicted on the side-view display preferably at least half the range that is shown on the top-down display of terrain in front of the airplane to the compass rose; but is preferably no greater than 2 times the range. Most preferably, the display's range is the same as the range that is shown on the map in front of the airplane to the compass rose.

If the aircraft is on a straight path, the terrain swath used to generate the display is preferably in the shape of a rectangle with a tapered end at the nose of the aircraft. In one embodiment, from the nose of the aircraft to 4630 m. (2.5 nm) in front of the aircraft, the width of the terrain swath is 463 m (0.25 nm) about the track of the aircraft (see Figure 2). From 4630 m. (2.5 nm) to 9260 m. (5 nm), width of the terrain swath is preferably 1389 m. (0.75 nm) about the track of the aircraft. From 9260 m. (5 nm) to the edge of the displayed VSD range, the width of the swath is preferably in the range of from 1852 to 14816 m. (1 to 8 nm), as illustrated in Table 1.

Table 1. Width of 5 nm to end of display section vs. range selection

| EFIS RANGE | Preferred Swath Width |
|---|---|
| 18520 m. (10 nm) | 1852 m. (1 nm) |
| 37040 m. (20 nm) | 3704 m. (2 nm) |
| 74080 m. (40 nm) | 7408 m. (4 nm) |
| 148160 m. (80 nm) | 14816 m. (8 nm) |
| 296320 m. (160 nm) | 14816 m. (8 nm) |
| 592640 m. (320 nm) | 14816 m. (8 nm) |
| 118580 m. (640 nm) | 14816 m. (8 nm) |

The varying swath takes into account coarse display resolution of range map scale settings greater than 18520 m. (10 nm) (see Table 1). For distances close to the aircraft (9260 m. (5 nm) and less) the swath of the terrain shown is preferably relatively narrow. Further away from the aircraft, the display shows the highest terrain in a larger swath.

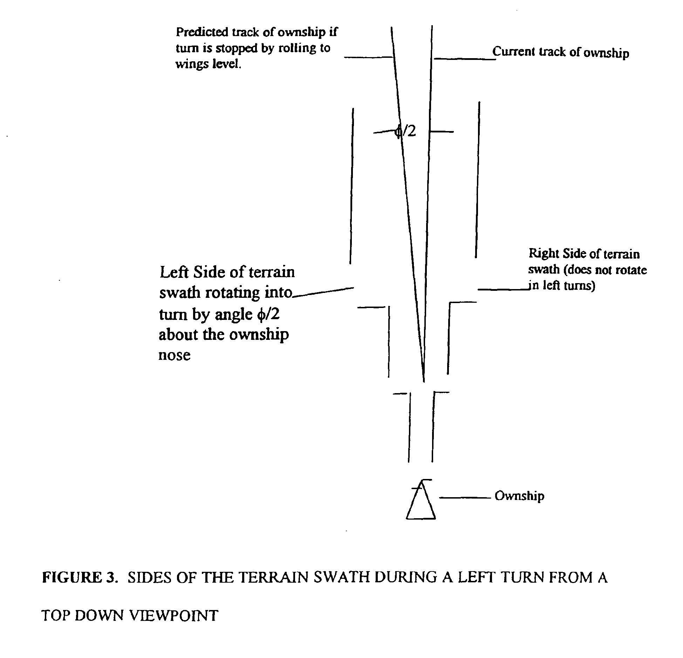

In a preferred embodiment, if the aircraft is turning, the display shows the terrain in the path of the turn, taking into account the aircraft's cross track acceleration, in which case the boundary of the swath also rotates away from the track line with the origin of the aircraft as the rotation point (see Figure 3). The left side of the swath will rotate left if the aircraft is turning left while the right side will stay straight along the current track. Then the right side of the swath will rotate right if the aircraft is turning right and the left side of the swath will stay straight along the current track. This gives a wedge of the terrain in front of the aircraft. The side of the swath preferably rotates φ/2 degrees where φ is the bank angle of a non-accelerated constant altitude turn that produces the current cross track acceleration.

The use of a relatively narrow swath of terrain to generate the display provides a terrain picture that has a more steady, filtered appearance than a display which only uses data from the line of terrain directly in front of the aircraft, while still showing relevant terrain in front of the aircraft. Preferably, waypoints in this swath are also shown.

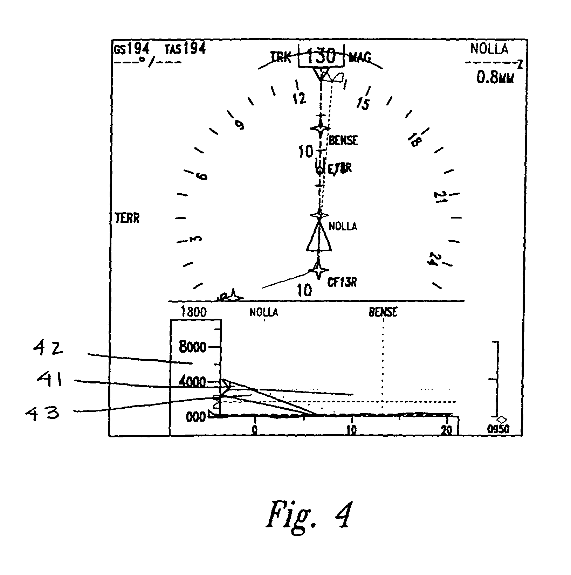

In the display, a vertical situation display includes a depiction of the glide slope of an approach for a runway when the aircraft is in a landing approach for the particular runway. The display also depicts the current angle of descent of the aircraft as a projected flight path on the display. If the aircraft is not within the glideslope for the runway, this type of display allows the pilot to directly see the extent to which the descent angle needs to be corrected. Figure 4 illustrates a vertical situation display. On the bottom portion of the display, a triangular-shaped icon 41 is positioned towards the left side of the display, which represents the aircraft. However, any shape of icon or reference symbol may be used. The flight direction of the aircraft is depicted from left to right of the aircraft icon, and a vertical elevation scale 42 on the left the side of the display provides information on the altitude of various points along the projected descent path. The glide slope is depicted as an overlay on the flight path of the aircraft using any suitable combination of lines or symbols. Preferably, the glide slope 43 is depicted in the same way as it is depicted in the same manner as it is shown in a standard approach chart with which the pilot is familiar. Typically, the glide slope is depicted as having the shape of narrow triangle. Such approach and landing approach charts are specific to each runway and are available from several companies and organizations, such as Jeppesen and National Oceanic and Atmospheric Service.

In the flight information display, a range-to-target speed symbol on the display automatically provides flight information in an operationally intuitive manner. This symbol can be shown on any type of flight deck display that shows the horizontal path of aircraft in any form, and may be any type of symbol that indicates the position or time where the selected speed will be achieved. The flight path vector can be colored to indicate this information on the primary flight information display, navigation display, or vertical situation awareness displays. There is no limit to how this information is depicted on the various displays. The range-to-target speed information is shown symbolically instead of textually to provide the pilot a clear and intuitive picture of the aircraft's situation. Examples of types of displays which may incorporate this type of symbol include vertical profile displays, primary flight information displays, navigation displays, head up displays, perspective displays/virtual reality displays, and three-dimensional displays.

A symbol on the display of the vertical flight path of the aircraft indicates the position along the vertical flight path vector where the current airspeed is predicted to equal the selected airspeed, given the current performance of the aircraft. Any symbol or icon may be utilized, but in one preferred embodiment, the flight path of the aircraft is shown as a white or light-colored vector emanating from the nose of the aircraft symbol, and the position at which the aircraft will reach the target speed is shown as a darker-colored dot (for example, a green dot) at a position along the vector. As a pilot initiates an approach to the airport, he must achieve the correct flight path and be at appropriate airspeeds before reaching a "final" position at which the pilot must decide whether to land or abort the landing and circle around to make another approach. The range-to-speed dot allows the pilot to assess the status of the descent and to recognize earlier situations that if uncorrected may lead to aircraft damage. A high speed landing while on path can result in a tailstrike, runway over runs, or hard landings resulting in airframe damage and possible injury to passengers. Avoiding these situations will save the airline from lost revenue and repair expenses that would result from approach and landing incidents.

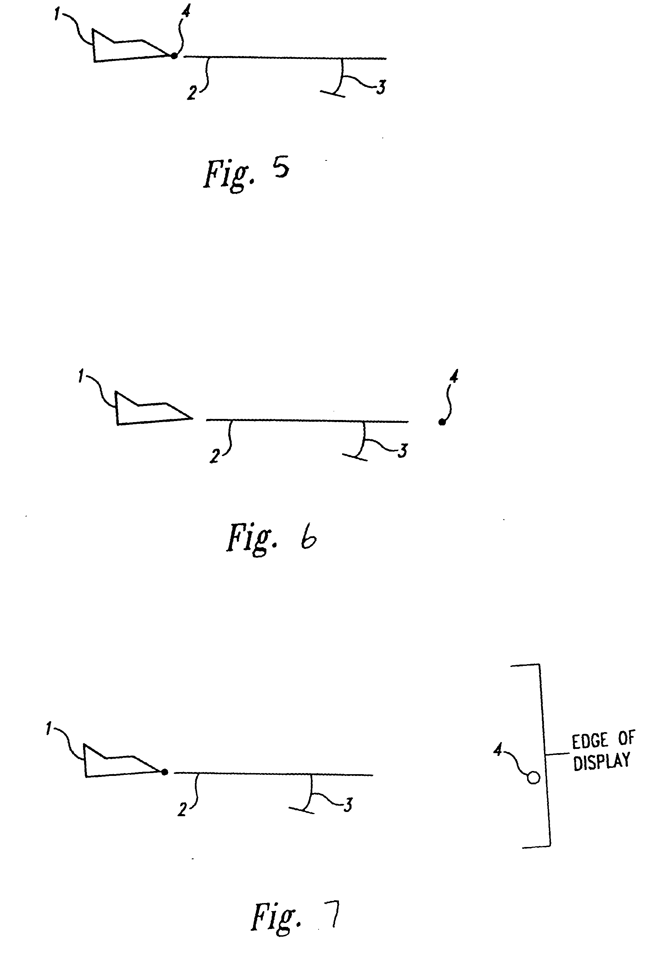

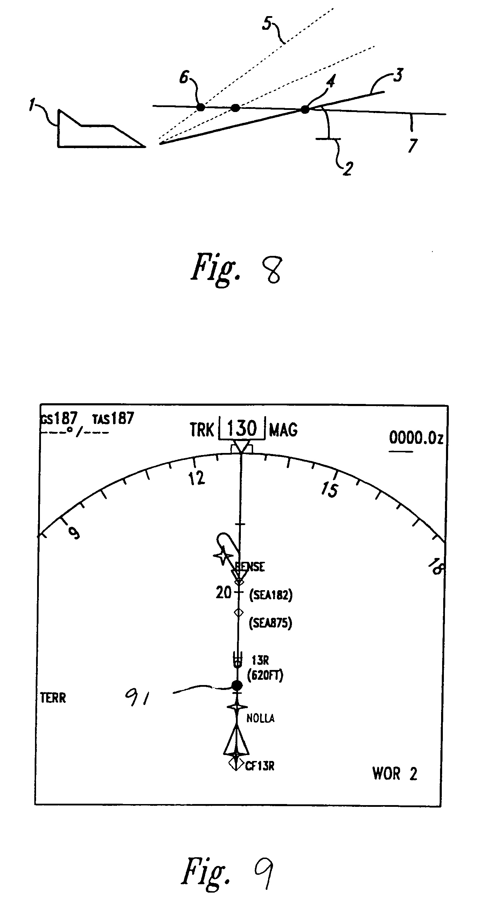

Although there can be many different ways of showing this position and related data, one preferred way of showing this position is by a filled/unfilled circle along the flight path. If the difference between the actual speed and target speed is less than a specified maximum, such as 2.572 m/s (5 knots), then the dot will be at the nose of the aircraft symbol as shown in Figure 5. This is one type of hysteresis that can be used so that the dot will act smoothly to changes in aircraft performance when nearing the target speed. If the speed difference is greater than the specified maximum but is converging to that number, the position where the target speed will be achieved is represented on the display as a filled green circle, if the aircraft is projected to reach that speed at a distance no greater than the range of the display, as shown in FIG. 6. If the speed difference is not converging to the specified maximum or the location where the target speed will be achieved is outside the range of the display, then the filled green circle becomes a larger unfilled circle and is positioned at the edge of the display along the predicted flight path as shown in Figure 7. By keeping the symbol on the display, the pilot will always be aware of the aircraft's speed situation and trend. Figure 8 shows a display having several dots, each of which indicate the location at which the aircraft 1 will achieve the target speed at various flight angles. For example, at flight path 3 having flight angle 2, the target speed will be achieved at point 4. At flight path 5, the target speed will be achieved at point 6. If desired, a line 7 may connect the dots, a target speed/distance may be selected, and the flight angle/acceleration necessary to achieve the target speed/distance may be determined.

The dot's position on the display is calculated (Equation 1), using groundspeed, inertial acceleration, and the time it takes to achieve the selected airspeed. Groundspeed and inertial acceleration are used to calculate the position because the display is referenced to the ground and the aircraft. The dot's vertical position is calculated in Equation 2 using vertical speed, current airspeed acceleration, and time to achieve the selected airspeed. Sensors measure groundspeed and inertial acceleration, but not time or airspeed acceleration. Therefore, the invention calculates the time to achieve the selected speed in Equation 3 using selected airspeed, current airspeed, and current airspeed acceleration. Selected airspeed is an input from the pilot or flight management computer and current airspeed is a measured value. Current airspeed acceleration is calculated in Equation 4 by dividing the change in airspeed by the change in time. The calculated position information is then scaled to the display settings to depict the correct position on the display.

$$d_{achieve} = vg_{current} * (t_{achieve} / 3600) + (½ * ag * \cos(\gamma) * t_{achieve}^2) / 6067 \quad \text{Eq. [1]}$$

$$h_{achieve} = vs_{current} * (t_{achieve} / 60) + ½ * a_{current} * \sin(\gamma) * t_{achieve}^2 \quad \text{Eq. [2]}$$

$$t_{achieve} = ((v_{selected} - v_{current}) * 6067) / (3600 * a_{current}) \quad \text{Eq. [3]}$$

$$a_{current} = ((v_{final} - v_{initial}) * 6067) / (3600 * (t_{final} - t_{initial})) \quad \text{Eq. [4]}$$

where: a = airspeed acceleration in ft/sec$^2$; v = calibrated airspeed in knots; t = time in seconds; d = distance along the ground in nm; h = height in feet; vg = Ground Speed in knots; vs = Vertical Speed in ft/min; ag = Inertial acceleration along $\gamma$ in units of g (32 ft/sec$^2$); $\gamma$ = Flight Path Vector in degrees

Airspeed acceleration does not have to be an unfiltered instantaneous current airspeed acceleration as defined by Equation 4; averaging the data over a short period of time will produce a more steady moving symbol.

This invention can be further utilized to provide a collection of points where the target speed will be achieved at various flight angles. As shown in figure 13, at flight angle 1 the selected speed will be achieved at A and at flight angle 2 the selected speed will be achieved at B, etc. All these points at various flight angles will produce a straight line in on the display. To generate this line or a set of dots, the acceleration needs to be predicted at the various flight angles.

This line would enable one to see how to make trade-offs between airspeed and altitude.

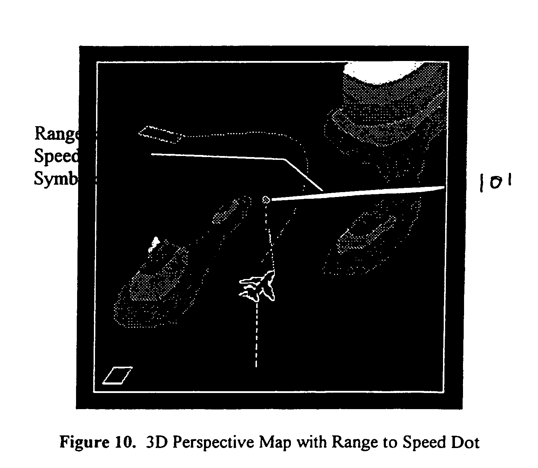

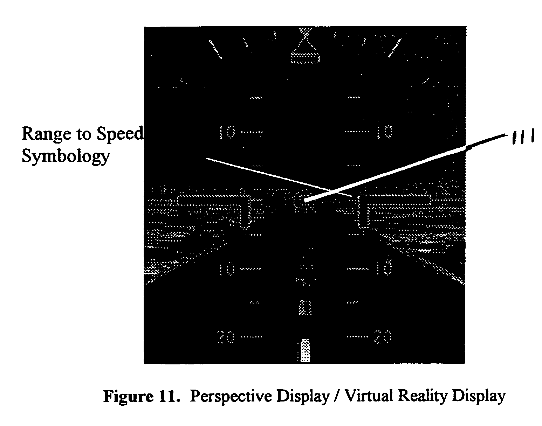

The range-to-target speed symbol can be located on the flight vector on a vertical situation awareness display (Figure 1), navigation display (dot 91 on Figure 9), three-dimensional perspective map (dot 101 on Figure 10), head up displays (dot 111 on Figure 11), or any type of virtual reality flight information display. The information can be displayed so that the symbology provides an estimate of where the pilot will achieve the target speed along the flight plan instead of the flight path.

The blended moving/fixed aircraft reference symbol (white aircraft in Figure 1) begins at the bottom of the display (on top of the horizontal gray shade) when the aircraft is on the ground. The bottom altitude of the display is defined to be the take off field elevation during the take off portion and the landing field elevation during the landing portion of flight. When the aircraft takes off, the aircraft will move vertically up along he altitude scale until it reaches a fixed point the top half of the display, preferably about two-thirds of the distance from the bottom of the display. At that point the aircraft is positioned at fixed on the display and the scale and background data move down away from the aircraft symbol as the aircraft climbs. The opposite is true for the descent case. The aircraft symbol stays fixed point on the display until the landing field elevation altitude reaches the bottom of the display. When the landing field elevation altitude becomes even with the bottom of the display, then the aircraft symbol moves down toward the landing field elevation altitude. The algorithms are straightforward as is the logic that switches between the vertically moving and the vertically fixed aircraft symbol. The aircraft is always fixed horizontally, adjacent to the left or right side of the display. The motion of the aircraft display allows the display to be relatively small and yet retain a high level of utility. This saves valuable display space, room in the cockpit that would be taken up by another display screen, and allows other pieces of information to remain visible to the pilot.

All of the visual displays of the invention may be electronically generated by any suitable means for converting electronic flight and terrain information, and any other data as appropriate, into a cockpit visual display having the above-described criteria and features. Example of electronic flight information systems that generate alarms and/or display other types of flight information, or have other formats, are described in US Patent Nos. 5,936,552, 5,839,080; 5,884,222; and 5,638,282.

**Claims**

1. A flight information display for a flight deck of an aircraft (1), the display showing a side view of a flight path (3,5) or area directly in front of the aircraft having a selected distance of at least 926 m. (0.5 nautical miles), the aircraft having means for determining the aircraft's location, the location determining means having a minimum accuracy, the display **characterized in that:**

   the display shows a pictorial representation to scale of a profile of highest elevations of a swath of terrain along the path area, a width of the swath widening as distance from the aircraft increases and being at least 185.2 m. (0.1 nautical miles) and no greater than a distance of the minimum accuracy of the location determining means; the display shows an icon (41) representing the aircraft, the icon being positioned on a left or right side of the display, the altitude of which is to scale with the height of the terrain, using an altitude reference scale.

2. The display of claim 1, further comprising a top-down display of a range of terrain in front of the airplane to a compass rose, wherein the selected distance shown in the side view is at least half the range of terrain shown on the top-down display.

3. The display of claims 1 or 2, wherein the selected distance shown in the side view is no greater than two times the range of terrain shown on the top-down display.

4. The display of claims 1 or 2, wherein the selected distance shown in the side view is the range of terrain shown on the top-down display.

5. The display of any of claims 1-4, wherein the swath is substantially rectangular, a length of a first section of the swath extending along a track of the aircraft from a nose of the aircraft to about 4630 m. (2.5 nautical miles) from the nose of the aircraft, a width of the first section of the swath extending about 463 m. (0.25 nautical miles) about the track of the aircraft, a length of a second section of the swath extending from about 4630 m. (2.5 nautical miles) from the nose of the aircraft to about 9260 m. (5 nautical miles) from the nose of the aircraft, width of the second section of the swath extending about 1389 m. (0.75 nautical miles) about the track of the aircraft.

6. The display of any of claims 1-5, wherein the length of a third section of the swath extends from about 9260 m. (5 nautical miles) from the nose of the aircraft to an edge of the display, the width of the third section of the swath extending from about 1852 m. (1 nautical mile) about the track of the aircraft to about 14816 m. (8 nautical miles) about the track of the aircraft.

7. The display of any of claims 1-6, wherein a boundary of the swath rotates away from the track of the aircraft in a direction of a turn, the boundary rotating from a rotation point at the origin of the track of the aircraft.

8. The display of any of claims 1-7, wherein the swath rotates ø/2 degrees, where ø is a bank angle of a non-accelerated, constant altitude turn.

9. The display of any of claims 1-8, for a flight deck of an aircraft, the display comprising:

an icon (41) having a fixed position on a left side of the display representing the aircraft;
a vertical altitude reference scale (42) which changes as altitude of the aircraft changes so that an altitude number horizontally aligned with the icon is current altitude of the aircraft, the icon being located vertically along the altitude reference scale while always being in view, of a user; and
a pictorial representation of a lateral view of terrain directly in front of the aircraft.

10. The display of claim 1 or 9, comprising an icon showing the location at which the aircraft will reach a target speed based on its current speed and acceleration, providing an indication of where in the vertical plane and along the flight path the target speed will be achieved.


**Patentansprüche**

1. Fluginformationenanzeige für einen Pilotenraum eines Luftfahrzeugs (1), wobei die Anzeige eine Seitenansicht eines Flugwegs (3, 5) oder eines Bereichs unmittelbar vor dem Luftfahrzeug mit einer ausgewählten Entfernung von mindestens 926 m (0,5 Seemeilen) anzeigt, wobei das Luftfahrzeug Mittel zum Bestimmen des Ortes des Luftfahrzeugs aufweist, wobei die Ortsbestimmungsmittel eine minimale Präzision aufweisen, wobei die Anzeige **dadurch gekennzeichnet ist, dass**:

die Anzeige eine maßstabsgerechte bildliche Darstellung eines Profils höchster Erhebungen eines Geländestreifens längs des Wegbereichs anzeigt, wobei sich eine Breite des Streifens mit zunehmender Entfernung vom Luftfahrzeug ausweitet und mindestens 185,2 m (0,1 Seemeilen) beträgt und nicht größer ist als eine Entfernung der minimalen Präzision der Ortsbestimmungsmittel;
die Anzeige ein Icon (41) anzeigt, welches das Luftfahrzeug darstellt, wobei das Icon auf einer linken oder rechten Seite der Anzeige positioniert ist, wobei die Höhe desselben maßstabsgerecht ist in Bezug auf die Höhe des Geländes, unter Verwendung einer Höhenbezugsskala.

2. Anzeige nach Anspruch 1, weiterhin umfassend eine Top-Down-Anzeige von einem Geländebereich vor dem Luftfahrzeug zu einer Kompassrose, wobei die in der Seitenansicht angezeigte ausgewählte Entfernung mindestens die Hälfte des auf der Top-Down-Anzeige angezeigten Geländebereichs ist.

3. Anzeige nach Anspruch 1 oder 2, wobei die in der Seitenansicht angezeigte ausgewählte Entfernung nicht größer ist als das Doppelte des auf der Top-Down-Anzeige angezeigten Geländebereichs.

4. Anzeige nach Anspruch 1 oder 2, wobei es sich bei der in der Seitenansicht angezeigten ausgewählten Entfernung um den auf der Top-Down-Anzeige angezeigten Geländebereich handelt.

5. Anzeige nach einem der Ansprüche 1 - 4, wobei der Streifen im Wesentlichen rechteckig ist, wobei sich eine Länge einer ersten Sektion des Streifens längs einer Bahn des Luftfahrzeugs ausgehend von einer Nase des Luftfahrzeugs bis zu etwa 4630 m (2,5 Seemeilen) ausgehend von der Nase des Luftfahrzeugs erstreckt, wobei sich eine Breite der ersten Sektion des Streifens etwa 463 m (0,25 Seemeilen) an der Bahn des Luftfahrzeugs erstreckt, wobei sich eine Länge einer zweiten Sektion des Streifens ausgehend von etwa 4630 m (2,5 Seemeilen) ausgehend von der Nase des Luftfahrzeugs bis zu etwa 9260 m (5 Seemeilen) ausgehend von der Nase des Luftfahrzeugs erstreckt, wobei sich eine Breite der zweiten Sektion des Streifens etwa 1389 m (0,75 Seemeilen) an der Bahn des Luftfahrzeugs erstreckt.

6. Anzeige nach einem der Ansprüche 1 - 5, wobei sich die Länge einer dritten Sektion des Streifens von etwa 9260 m (5 Seemeilen), ausgehend von der Nase des Luftfahrzeugs, bis zu einem Rand der Anzeige erstreckt, wobei sich die Breite der dritten Sektion des Streifens ausgehend von etwa 1852 m (1 Seemeile) an der Bahn des Luftfahrzeugs bis zu etwa 14816 m (8 Seemeilen) an der Bahn des Luftfahrzeugs erstreckt.

7. Anzeige nach einem der Ansprüche 1 - 6, wobei sich eine Grenze des Streifens von der Bahn des Luftfahrzeugs weg in Richtung einer Wendung dreht, wobei sich die Grenze ausgehend von einem Rotationspunkt am Ursprung der Bahn des Luftfahrzeugs dreht.

8. Anzeige nach einem der Ansprüche 1 bis 7, wobei sich der Streifen um ø/2 Grad dreht, wobei ø ein Querneigungswinkel einer nicht beschleunigten Wendung mit konstanter Höhe ist.

9. Anzeige nach einem der Ansprüche 1 bis 8, für einen Pilotenraum eines Luftfahrzeugs, wobei die Anzeige Folgendes umfasst:

ein Icon (41), welches eine festgelegte Position auf einer linken Seite der Anzeige hat und das Luftfahrzeug darstellt;
eine Vertikalhöhen-Bezugsskala (42), die sich mit Veränderung der Höhe des Luftfahrzeugs ändert, so dass eine horizontal mit dem Icon auf einer Linie liegende Höhenzahl die gegenwärtige Höhe des Luftfahrzeugs darstellt, wobei das Icon vertikal entlang der Höhenbezugsskala angeordnet ist, während es sich immer im Blick eines Benutzers befindet; und
eine bildliche Darstellung einer Seitenansicht des direkt vor dem Luftfahrzeug befindlichen Geländes.

10. Anzeige nach Anspruch 1 oder 9, umfassend ein Icon, das den Ort, an dem das Luftfahrzeug eine Zielgeschwindigkeit erreichen wird, basierend auf dessen gegenwärtiger Geschwindigkeit und Beschleunigung anzeigt, wobei ein Hinweis darauf geliefert wird, wo in der vertikalen Ebene und entlang dem Flugweg die Zielgeschwindigkeit erreicht werden wird.


**Revendications**

1. Afficheur d'informations de vol destiné au poste de pilotage d'un avion (1), l'afficheur représentant une vue latérale d'une trajectoire de vol (3, 5) ou de la zone située directement face à l'avion et dont la distance sélectionnée est d'au moins 926 m (0,5 mille marin), l'avion possédant un moyen permettant de déterminer la position de l'avion, le moyen de détermination de position offrant une précision minimum, l'afficheur étant **caractérisé en ce que:**

l'afficheur offre une représentation imagée à l'échelle d'un profil du plus haut relief du terrain balayé sur cette trajectoire ou sur cette zone, la largeur de balayage s'accroissant en s'éloignant de l'avion et étant d'au moins 185,2 m (0,1 mille marin) et ne dépassant pas la distance de précision minimum du moyen de détermination de position;
l'afficheur représente une icône (41) qui représente l'avion, l'icône figurant sur le côté gauche ou droit de l'afficheur et son altitude étant représentée à l'échelle du relief du terrain, en faisant appel à une échelle de référence d'altitude.

2. Afficheur selon la revendication 1, comprenant en outre un affichage descendant d'une distance de terrain face à l'avion conformément à une rose des vents, dans lequel la distance sélectionnée montrée dans la vue latérale correspond à au moins la moitié de la distance de terrain présentée sur l'affichage descendant.

3. Afficheur selon les revendications 1 ou 2, dans lequel la distance sélectionnée montrée dans la vue latérale ne dépasse pas deux fois la distance de terrain présentée sur l'affichage descendant.

4. Afficheur selon les revendications 1 ou 2, dans lequel la distance sélectionnée montrée dans la vue latérale correspond à la distance de terrain présentée sur l'affichage descendant.

5. Afficheur selon l'une quelconque des revendications 1 à 4, dans lequel la zone balayée est essentiellement rectangulaire, la longueur d'une première section de la zone balayée s'étendant le long d'une route de l'avion comprise entre le nez de l'avion et environ 4 630 m (2,5 milles marins) à partir du nez de l'avion, la largeur de la première section de la zone balayée s'étendant sur environ 463 m (0,25 mille marin) autour de la route de l'avion, la longueur d'une deuxième section de la zone balayée s'étendant entre environ 4 630 m (2,5 milles marins) à partir du nez de l'avion et environ 9 260 m (5 milles marins) à partir du nez de l'avion, la largeur de la deuxième section de la zone balayée s'étendant sur environ 1 389 m (0,75 mille marin) autour de la route de l'avion.

6. Afficheur selon l'une quelconque des revendications 1 à 5, dans lequel la longueur d'une troisième section de la zone balayée s'étend entre environ 9 260 m (5 milles marins) à partir du nez de l'avion et un bord de l'afficheur, la largeur de la troisième section de la zone balayée s'étendant entre environ 1 852 m (1 mille marin) autour de la route de l'avion et environ 14 816 m (8 milles marins) autour de la route de l'avion.

7. Afficheur selon l'une quelconque des revendications 1 à 6, dans lequel la limite de la zone balayée s'éloigne de la route de l'avion selon une rotation dans une direction d'un virage, la limite effectuant une rotation à partir d'un point situé à l'origine de la route de l'avion.

8. Afficheur selon l'une quelconque des revendications 1 à 7, dans lequel la zone balayée effectue une rotation de ø/2 degrés, ø correspondant à un angle d'inclinaison d'un virage non accéléré à altitude constante.

9. Afficheur selon l'une quelconque des revendications 1 à 8, destiné au poste de pilotage d'un avion, l'afficheur comprenant:

    une icône (41) à position fixe sur un côté gauche de l'afficheur représentant l'avion;
    une échelle verticale de référence d'altitude (42) changeant au fur et à mesure que l'altitude de l'avion varie de sorte que l'indice d'altitude aligné horizontalement avec l'icône représente l'altitude actuelle de l'avion, l'icône étant placée verticalement le long de l'échelle de référence d'altitude tout en étant toujours visible pour l'utilisateur; et
    une représentation imagée d'une vue latérale du terrain situé directement face à l'avion.

10. Afficheur selon la revendication 1 ou 9, comprenant une icône présentant la position à laquelle l'avion atteindra une vitesse cible sur la base de sa vitesse actuelle et de son accélération et apportant une indication relative à l'emplacement, sur le plan vertical et le long de la trajectoire de vol, auquel la vitesse cible sera atteinte.

*Fig. 1*

Track of ownship

End of display range
(10, 20, 40, 80, 160, 320, or 640)

Sides of the terrain swath varies
with range setting
(1, 2, 4, or 8 nm)

5 nm from the
ownship

Sides of the terrain swath is
0.75 nm about the track of
the ownship

2.5 nm from the
ownship

Sides of the terrain swath is
0.25 nm about the track of
the ownship

Ownship

FIGURE 2. SIDES OF THE TERRAIN SWATH FROM THE (5 NM) TO END OF
THE DISPLAY RANGE FROM A TOP DOWN VIEWPOINT

EP 1 200 949 B1

Predicted track of ownship if
turn is stopped by rolling to
wings level.

Current track of ownship

$\phi/2$

Left Side of terrain
swath rotating into
turn by angle $\phi/2$
about the ownship
nose

Right Side of terrain
swath (does not rotate
in left turns)

Ownship

FIGURE 3.  SIDES OF THE TERRAIN SWATH DURING A LEFT TURN FROM A

TOP DOWN VIEWPOINT

11

*Fig. 4*

*Fig.* 5

*Fig.* 6

EDGE OF
DISPLAY

*Fig.* 7

**Fig. 8**

**Fig. 9**

**Figure 10.** 3D Perspective Map with Range to Speed Dot

Range to Speed
Symbology

**Figure 11.** Perspective Display / Virtual Reality Display

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5445021 A
- US 5839080 A
- US 5936552 A
- US 5884222 A
- US 5638282 A